## Europäisches Patentamt

## European Patent Office

## Office européen des brevets

(11) Publication number: **0 292 335**
**A1**

(12) **EUROPEAN PATENT APPLICATION**

(21) Application number: 88304665.8

(22) Date of filing: 23.05.88

(51) Int. Cl.⁴: **B 63 B 59/02**

(30) Priority: 22.05.87 JP 75948/87
02.06.87 JP 85480/87

(43) Date of publication of application:
23.11.88 Bulletin 88/47

(84) Designated Contracting States: FR GB NL

(71) Applicant: THE YOKOHAMA RUBBER CO., LTD.
36-11, Shinbashi 5-chome Minato-ku
Tokyo, 105 (JP)

(72) Inventor: Matsushita, Kazuo
3-5-46, Nakahara
Hiratsuka-shi Kanagawa-ken (JP)

(74) Representative: White, Martin David et al
MARKS & CLERK 57/60 Lincoln's Inn Fields
London WC2A 3LS (GB)

(54) Pneumatic fender construction.

(57) Pneumatic fenders are disclosed which have a specified joint structure (11) assembled in a converged opening of the fender body (10). The joint (11) comprises a fiting (12) embedded in the opening and having inside and outside flanges (15,16), a mount (13) secured to the inside flange (15), and a cover (14) attached to the outside flange (16). The fender is highly airtight, sufficiently durable, relatively light in weight and economically feasible.

**FIG.1**

EP 0 292 335 A1

**Description**

# PNEUMATIC FENDER CONSTRUCTION

This invention relates to pneumatic floatable fenders suitable for general use.

A fender is referred to as a device acting as a buffer between two ships or between a ship and a wharf that absorbs and distributes severe force and thus prevents ships and wharves from chafing or external damage.

Pneumatic fenders of a large diameter, generally 2.5 meters or greater, are known which have a metallic chain or wire netting peripherally disposed and interengaged with two eyeplate-fixed closures coupled by shackles to the net at its oppositely converged ends. This net construction compensates for insufficient structural strength of the body particularly at a region around the closure. Such prior type of fender, however, is not totally satisfactory partly because it is too heavy in weight due to the use of a metal net and partly because it is prone to mar the broadside of a ship when brought into impinging contact with the net.

Also known in common use are pneumatic fenders dimensioned to be not more than 2 meters in diameter and dispensing with a net covering. This fender employs a coupling member having a fitting of T-shaped cross section integrally embedded in an opening of the fender body, and an air valve-built mount airtightly secured through a sealant to the fitting by a bolt-nut connector. A U-shaped hook extends outwardly from the mount for anchorage. Such prior arrangement has a drawback in that when repeatedly exerted by severe pulling force, the mount tends to separate from the fitting and hence results in air leakage.

To improve protection against abrasive wear, a plurality of tires are usually laid at selected positions on a net-type fender. In general, a fender has a multi-layered body made up of an inner rubber layer, an intermediate cord of reinforcement and an outer rubber layer. In this construction, however, a pointed or sharp-edged object having stuck in the outer layer would in most instances pierce and cut the reinforcing cord, leading to hazardous pressure drop. Also seriously, maintenance is difficult to effect with promptness because the outer layer is not found abrasively worn until the cord is exposed from the fender body. Such a case is literally highly susceptible to malfunction. This problem has been coped with by increasing the thickness of the outer layer but with cost and weight burdens.

With the foregoing difficulties of the prior art in view, the persent invention seeks to provide an improved pneumatic fender which is highly airtight, sufficiently durable, rather light in weight and economically feasible.

Many other objects and advantages of the invention will be better understood from the following description taken in connection with the accompanying drawings in which certain preferred embodiments of the invention are shown for illustrative purposes.

According to the invention, a pneumatic fender comprises a fender body and a joint structure assembled in two oppositely converged openings of the body, the joint structure comprising a fitting provided with an inside flange and an outside flange and integrally embedded in each of the openings, a mount fixed with an air valve and tightly secured by fastening means to the inside flange, and a cover firmly attached by fastening means to the outside flange and having an eyeplate outwardly joined.

Figure 1 is a partial cross-sectional view of one embodiment of the present invention with the joint structure enlarged;

Figure 2 is a view similar to Figure 1, but showing a modified form of joint structure;

Figure 3 is a plan view explanatory of a pneumatic, net-type fender of the prior art;

Figure 4 is a view similar to Figure 1, but showing the coupling member of a pneumatic, net-free fender of the prior art;

Figure 5 is a segmentary cross-sectional view of the fender body forming another embodiment of the invention;

Figure 6 is an explanatory plan view of a pneumatic, net-free fender of the prior art; and

Figure 7 is an enlarged cross-sectional view of a fender body portion indicated by the arrow in Figure 6.

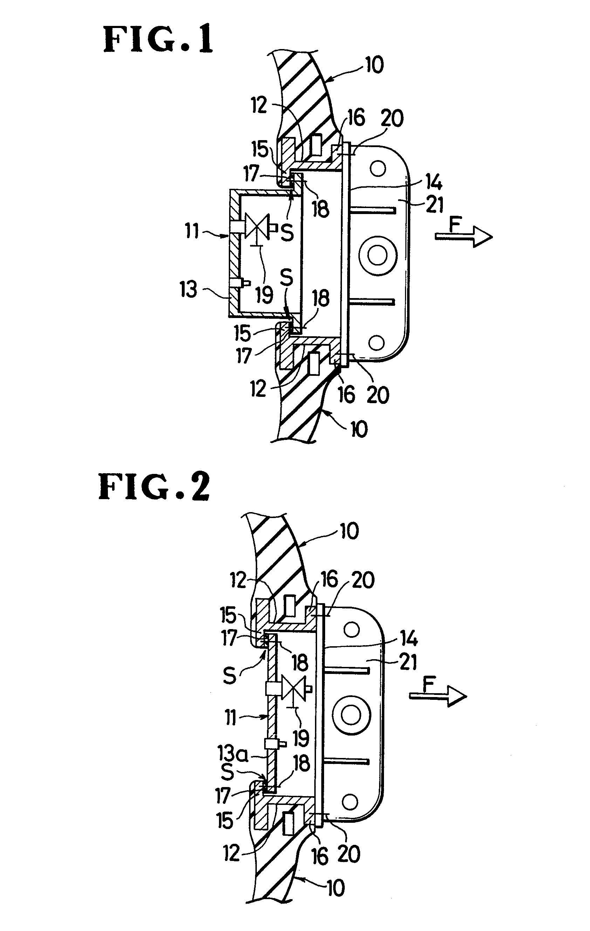

A joint structure, provided in accordance with the present invention and shown at 11 in Figure 1, is essentially comprised of a fitting 12, a mount 13 and a cover 14. The fitting 12 has an inside flange 15 and an outside flange 16 and disposed in integrally embedded relation with a converged opening of a fender body 10. The mount 13, shown to be concave in Figure 1, is tightly secured through a sealant 17 to the inside flange 15 with use of fastening means 18 such as a tap bolt, thus creating firm sealing S between the body 10 and the mount 13. Located inwardly of the mount 13 is an air valve 19 to supply air pressure into the body 10. The cover 14 is arranged to securely engage with the outside flang 16 as by a tap bolt 20. Designated at 21 is an eyeplate extending outwardly from the cover 14 for connection to suitable anchoring means.

Advantageously, when subjected during anchorage to strong pulling force F indicated by the arrow, the joint structure 11 enables such force to be fully arrested at the coupling between the cover 14 and the outside flange 16 so that the sealing S is maintained immune from the force F and hence sufficiently airtight.

The clearance defined between the cover and the mount is in an extent to accommodate a given air valve. In the practice of the invention, a substantially flat mount may also be suitably used as seen at 13a in Figure 2. The same beneficial effects can be achieved as is with the concave mount 13.

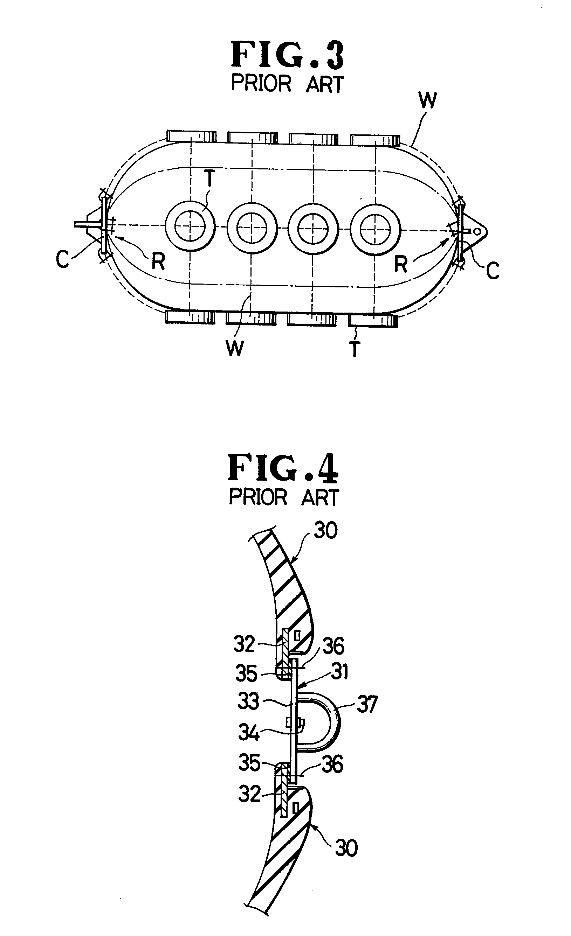

Figure 3 shows a pneumatic, net-type fender of the prior art. In this drawing, C is a closure, W is a chain or wire netting, T is a protective tire, and R is a body portion adjacent to the closure and sensible for mechanical weakness. A pneumatic, net-free fender of the prior art is shown in Figure 4 in which 30 is a fender body, 31 is a coupling member, 32 is a T-shaped fitting, 33 is a mount, 34 is an air valve, 35 is a sealant, 36 is a bolt-nut connector, and 37 is an anchoring hook.

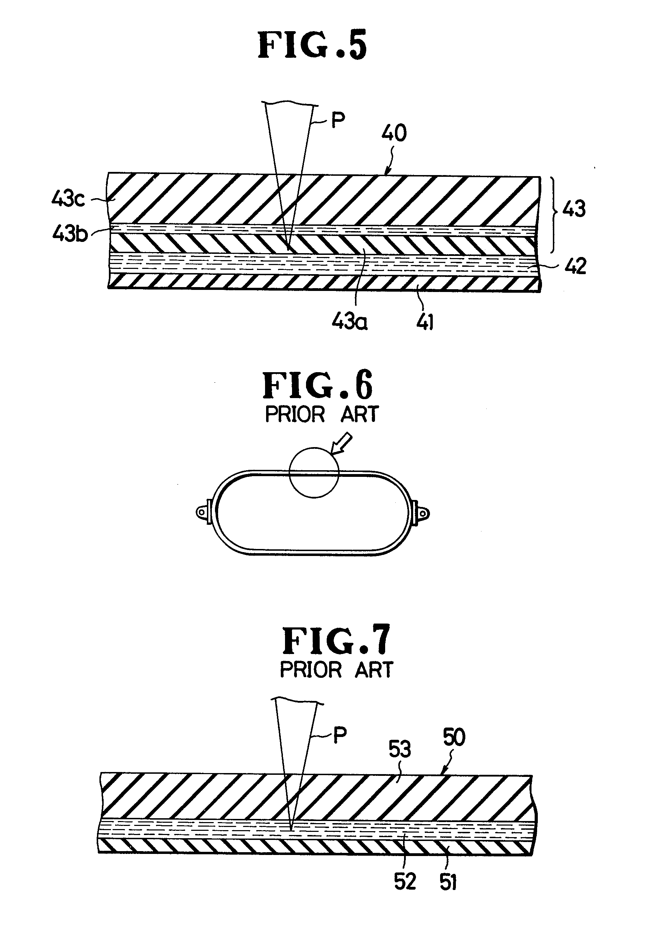

A fender body construction constituting another embodiment of the invention will now be described having regard to Figure 5. The body 40 is of a multi-layered structure having an inner rubber layer 41, a composite outer layer 43 and a reinforcing cord 42 disposed therebetween. Importantly, the outer layer 43 is composed, as contrasted to a prior construction shown in Figures 6 and 7 in which 50 is a body, 51 is an inner layer, 52 is a cord, and 53 is an outer layer, of a buffer layer 43a, a barrier layer 43b and a surface layer 43c superimposed in this order.

The surface layer 43c should be formed of highly abrasion- and cut-resistant rubbers in a thickness of about 5 to 30 millimeters. Eligible materials useful in the barrier layer 43b include tire cords of synthetic fibers as is in the cord 42 but in one or two plies, and steel cords in one or two plies. Any rubbers commonly employed in the surface layer 43c are suitable for the buffer layer 43a.

With this arrangement, the buffer and barrier layers 43a and 43b are reliably capable of arresting a pointed object P having penetrated through the surface layer 43c and tending to break the reinforcing cord 42. Further, the finished fender product exhibits enhanced durability iwithout resorting to increased thickness of the outer layer as encountered with the prior art fender. Early maintenance is rendered possible on exposure of the barrier layer without involving quality deterioration.

or a steel cord.

## Claims

1. A pneumatic fender comprising a fender body and a joint structure assembled in two oppositely converged openings of said body, said joint structure comprising a fitting provided with an inside flange and an outside flange and integrally embedded in each of said openings, a mount fixed with an air valve and tightly secured by fastening means to said inside flange, and a cover firmly attached by fastening means to said outside flange and having an eyeplate outwardly joined.

2. The fender of claim 1 wherein said mount is in a concave form.

3. The fender of claim 1 wherein sail mount is in a substantially flat form.

4. The fender of claim 1 wherein said fender body comprises an inner rubber layer, an outer layer and a reinforcing layer interposed therebeween, said outer layer including a buffer layer, a barrier layer and a surface layer superimposed one on another.

5. The fender of claim 4 wherein each of said buffer and surface layers is formed of a rubber, and said barrier layer is formed of a fibrous cord

0292335

**FIG.1**

**FIG.2**

0292335

# FIG.3
## PRIOR ART

# FIG.4
## PRIOR ART

0292335

# FIG.5

# FIG.6
## PRIOR ART

# FIG.7
## PRIOR ART

| Category | Citation of document with indication, where appropriate, of relevant passages | Relevant to claim | CLASSIFICATION OF THE APPLICATION (Int. Cl.4) |
|---|---|---|---|
| | DOCUMENTS CONSIDERED TO BE RELEVANT | | EP 88304665.8 |
| X<br>A | GB - A - 904 307 (THE YOKOHAMA RUBBER COMPANY LIMITED)<br>* Fig. 3,10-13 *<br>---- | 1,2,3<br>4,5 | B 63 B 59/02<br><br>TECHNICAL FIELDS SEARCHED (Cl.4)<br><br>B 63 B |

The present search report has been drawn up for all claims

| Place of search | Date of completion of the search | Examiner |
|---|---|---|
| VIENNA | 26-07-1988 | SCHMICKL |